# EUROPEAN PATENT APPLICATION

(11) **EP 0 999 035 A2**
(43) Date of publication of application: **10.05.2000**
(21) Application number: 99121706.8
(22) Date of filing: 02.11.1999
(51) Int. Cl.: B29C 51/28, B31B 43/00

(54) **Paperboard trays, method and apparatus for forming such trays**

(30) Priority: 02.11.1998 JP 31254698
(71) Applicant: Kondo Machinery Corporation, Mizuma-gun, Fukuoka-ken (JP)
(72) Inventor: Kondo, Masakazu,, Mizuma-gun, Fukuoka-ken (JP); Kawano, Shukuchi, Ohkawa-shi, Fukuoka-ken (JP)
(74) Representative: Gallo, Wolfgang, Dipl.-Ing. (FH)

(57) **Abstract**

A method and an apparatus are disclosed for forming a paperboard tray in a cost effective manner and also to control wrinkling in portions where greater deformations occur during forming. In place of a conventional rigid male die, an inflatable bag-like press member (20), which is made of a rubber-like material, is employed to compress a paperboard blank against a stationary die member (31). During forming, the inflatable bag and the stationary die member are heated to facilitate the formation of the tray. Preferably, the formation of the tray is accomplished by first causing the inflatable bag to compress the blank lightly against the die member and then progressively increasing the air pressure in the inflatable bag so that the paperboard blank may be gradually drawn into a die cavity of the stationary die member.

## Description

### BACKGROUND OF THE INVENTION

The present invention relates to the formation of articles from paperboard, and more particularly to the formation of trays from paperboard or similar stock. Specifically, it concerns formed paper trays per se, and a method and an apparatus for forming such trays.

Containers in the form of shallow-drawn trays are well known for use in packaging fresh foods such as vegetables. It has been a common practice in the art to form such trays from synthetic materials such as expanded polystyrene or the like. These expanded polystyrene trays find widespread use in various sectors of the food industry because of their relatively low prices, adequate mechanical strength and waterproofness. However, they have not gained wider consumer acceptance because of environmental concerns related to the use of expanded polystyrene and particularly to the well-known disposability problems. Specifically, incineration is a most commonly used method for disposing such expanded polystyrene. However, because of the light burning temperature of expanded polystyrene, incinerators are subject to damages and also to emitting black smoke or hazardous gases.

Recently, in the manufacture of food trays, paperboard has been used as an alternative material that provides a suitable replacement for expanded polystyrene. Examples of such paperboard trays are described in Japanese Laid Open Patent Application Nos. 9-142432 and 9-254280.

Japanese Laid Open Patent Application No. 9-142432 discloses a paperboard tray that can be manufactured by compressing two sheets of paper and an intervening layer of thermoplastic material while heating these layers. Also, Japanese Laid Open Patent Application No. 9-254280 discloses thermally bonding a thermoplastic film to a flange portion of a sheet of paper, followed by drawing trays from such a composite blank via vacuum forming or the like.

However, paperboard trays manufactured by these prior art methods suffer from various shortcomings as set forth below:

By way of example, paperboard trays formed by the method of Japanese Laid Open Patent Application No. 9-142432 are not entirely free from the environmental problems associated with their disposal because they use the intervening thermoplastic film to provide waterproofness.

Also, paperboard trays are typically formed by a press which compresses paperboard blanks between a male and a female dies. Such a die set is relatively costly because strict manufacturing tolerances are required for the dies to produce a high-quality product with an acceptably small rate of tearing and other defects. Furthermore, to produce products of different sizes and shapes, it is necessary to provide die sets of different sizes and shapes, which leads to an increased cost of paperboard trays. Moreover, the paperboard trays manufactured by compressing paperboard blanks between two mating dies are prone to the presence of wrinkles in rounded corners of the trays where greater deformations occur to the paperboard.

Paperboard trays manufactured by using the method of Japanese Laid Open Patent Application No. 9-254280 not only cannot avoid the environmental problems of disposal due to the partial use of the thermoplastic film but also suffer from the relatively high cost of manufacture because the paperboard stock needs to be preformed to have a flange to which the thermoplastic film is bonded in a later step.

It would be highly desirable to have a tray made entirely of paperboard to eliminate the environmental problems of disposal and emission of hazardous gases during incineration or the like.

### SUMMARY OF THE INVENTION

It is therefore the principal object of the present invention to provide such paperboard trays and a method and an apparatus for forming such trays from paperboard stock, free from the shortcomings of the prior art and capable of producing a high-quality product by using an inflatable bag-type male die in place of a rigid and costly male die requiring strict manufacturing tolerances.

Another object of the invention is to provide such a method and apparatus which can be used to form paperboard trays in a manner that controls wrinkling of portions subjected to greater deformations during forming.

Briefly, this object as well as other objects of the present invention is accomplished in a paperboard tray which is formed by using a stationary die member and an inflatable bag member supplied with a controllable amount of fluid to compress a paperboard blank placed between the stationary die member and the inflatable bag member into a desired tray shape. In one embodiment of the invention, the stationary die member and the inflatable bag are heated during compressing of the paperboard blank into the desired tray shape. Preferably, the paperboard blank used is corrugated paperboard.

According to another aspect of the invention, there is provided a method for forming a paperboard tray, comprising the steps of: heating an inflatable bag member and a stationary die member; placing a paperboard blank in position between the inflatable bag member and the stationary die member; and supplying a controllable amount of fluid to the inflatable bag member to inflate the bag member so that the paperboard blank may be compressed into a desired tray shape. In a preferred embodiment of the invention, the stationary die member has lubricant mean provided in or near its periphery so that the paperboard blank can readily move relative to the stationary die member.

According to a further aspect of the invention, there is provided an apparatus for forming a paperboard blank into a tray, comprising: a stationary die member; means for heating the stationary die member; an inflatable bag member; a source of fluid to be connected to the inflatable bag member; means for heating the inflatable bag member; and means for supplying a controllable amount of the fluid from the fluid source to the inflatable bag so that the inflatable bag member gradually compresses paperboard blank against the stationary die member to produce a paperboard tray. In a further embodiment of the invention, the apparatus further includes means for removing air from a plenum occurring between the paperboard blank and the stationary die member during the compressing step. Also, the apparatus further includes means for providing lubrication to a ring portion of the stationary die member so that the paperboard blank can readily move relative to the die member.

### BRIEF DESCRIPTION OF THE DRAWINGS

Figure 1 is a perspective view of a paperboard tray manufactured in accordance with the present invention;
Figure 2 is a perspective view of a paperboard tray forming machine according to the present invention;
Figure 3 is a perspective view of a stationary lower die assembly used to form the paperboard tray of Figure 1;
Figure 4 is a cross-sectional view showing a portion of the paperboard tray forming machine prior to the forming process;
Figure 5 is a view similar to Figure 4, showing the portion of the paperboard tray forming machine during compressing of a paperboard blank;
Figure 6 is a view similar to Figure 4, showing the removal of the formed paperboard tray from the machine; and
Figure 7 is a view similar to Figure 4, illustrating another method for forming a paperboard tray.

### DESCRIPTION OF THE PREFERED EMBODIMENTS

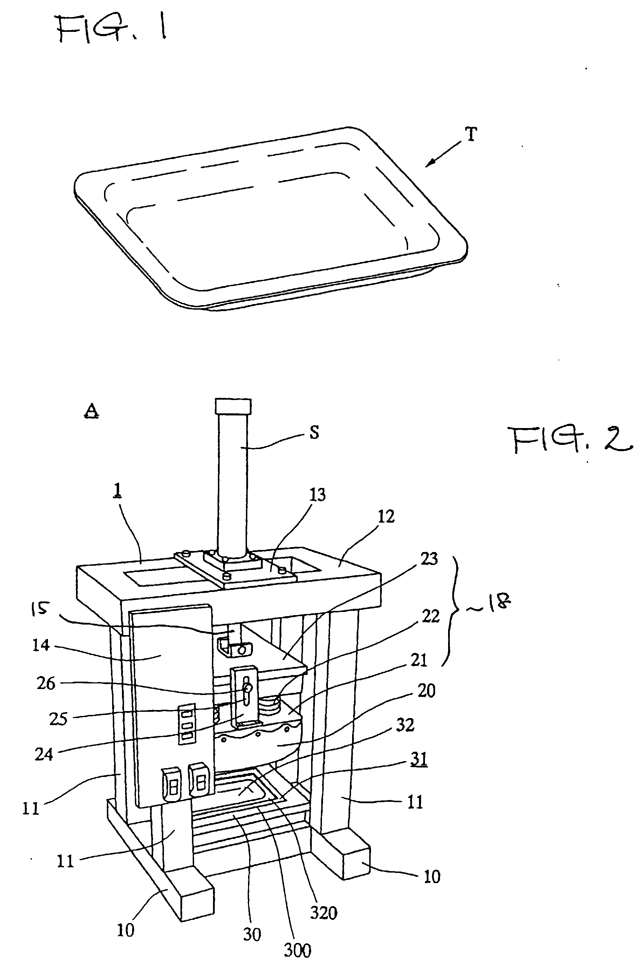

Referring to the drawings, wherein like reference numerals refer to like elements, Figure 1 shows a paperboard tray T that can be manufactured using the method and apparatus of the present invention. It should be noted that the tray T is coated on its inside surface with a thin film of water repellent paste to provide waterproofness for the tray. Examples of paperboard stock that can be used include corrugated paperboard, paperboard normally used to fabricate a commercially available waterproof milk carton, etc.

Figure 2 shows a paperboard tray forming machine A according to the present invention, which has a rigid frame structure 1. The frame structure 1 comprises an H-shaped bottom stand 10, a horizontal top plate 12 and four support posts 11 extending vertically between the bottom stand 10 and the horizontal top plate 12 to provide mechanical support for the machine.

The paperboard tray forming machine A comprises a stationary lower die assembly 30 disposed centrally above the bottom stand 10, and a movable upper press assembly, generally designated at 18, which can be moved for vertical reciprocation relative to the stationary lower die assembly 30. Although not specifically shown, the stationary lower die assembly 30 has a heater device for heating a female die 31 formed in the die assembly 30. The stationary lower die assembly 30 is generally made of metal. However, the female die 31 is made of wood and is removably mounted in a generally rectangular recess 300 which is formed in the lower die assembly 30. The female die 31 includes a perimetral outer portion 322, a generally rectangular ring portion 320 which is surrounded by, and slightly recessed from, the perimetral outer portion 322, and a die cavity 32 surrounded by the ring portion 320. Since the female die 31 is made of wood, it can be fabricated at a relatively low cost. It should be noted, of course, that the female die 31 may be made of metal or other materials.

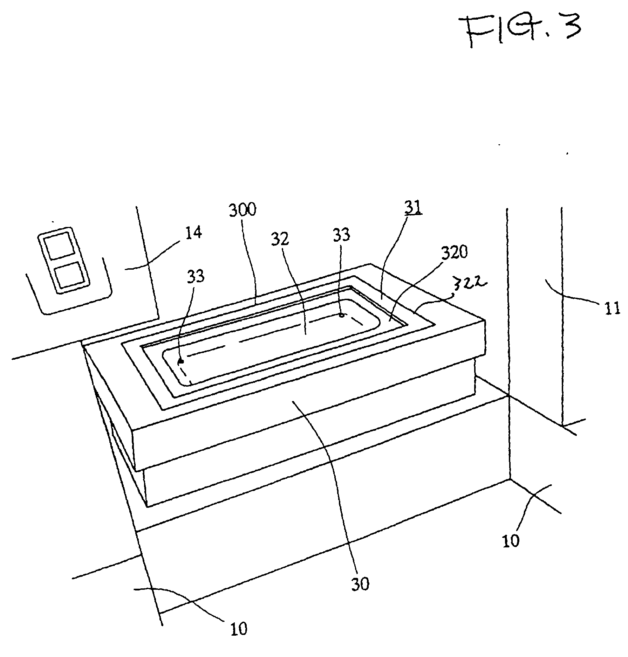

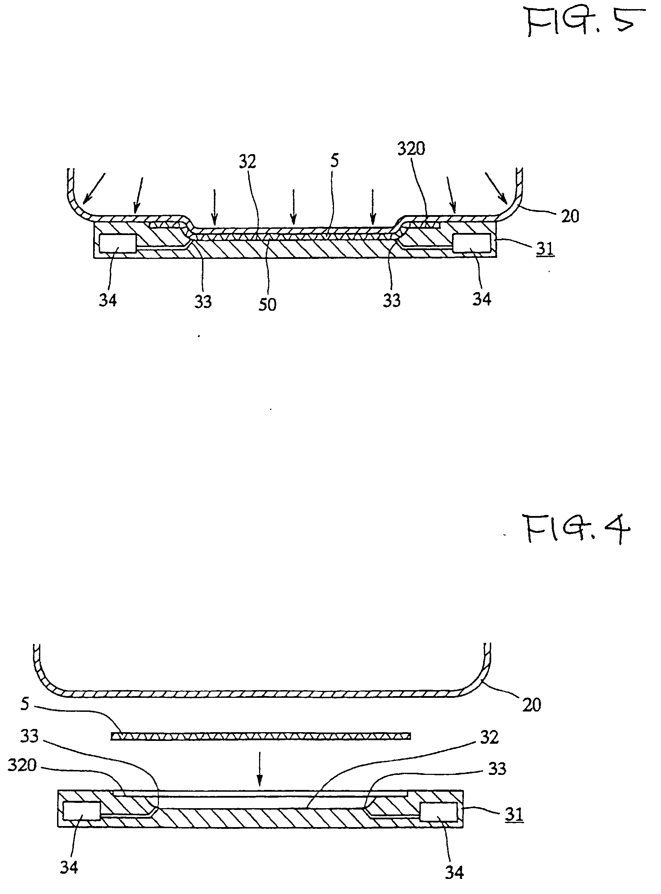

As best seen in Figure 3, the die cavity 32 includes a vent hole 33 formed at every corner of the bottom thereof to remove air from the cavity during the forming process. As seen in Figure 4, the vent holes 33 are in communication with a manifold 34 which is pneumatically connected to a vacuum pump or the like (not shown).

Referring back to Figure 2, the movable upper press assembly 18 includes an inflatable bag or press member 20 which is made of a sheet of rubber or similar material. In one embodiment of the invention, a 2 mm thick rubber sheet is used to fabricate the inflatable bag 20. The inflatable bag 20 is sealingly attached to a generally rectangular mounting plate 21 and is normally in a slightly inflated condition.

The inflatable bag 20 is pneumatically connected to a source of pressurized air (not shown) via a control valve (not shown) to supply a controllable amount of pressurized air to the inflatable bag 20 so that it may be inflated during forming and deflated during removal of an formed tray.. Nitrogen gas or other gases or hydraulic fluids may be used in place of air to inflate the inflatable bag 20.

The mounting plate 21 includes an infrared heating device (not shown) which is enclosed within the inflatable bag 20. With this arrangement, the infrared heating device can heat the inflatable bag 20 in an efficient and effective manner.

Also, the paperboard tray forming machine A includes a source of pressurized air (not shown) for

The movable upper press assembly 18 also includes a movable press support plate 23 from which two coil springs 22 depend to normally support the mounting plate 21 and the inflatable bag 20 above the stationary lower die assembly 30. The press support plate 23 is vertically movable relative to the stationary top plate 12.

Disposed on top of the stationary top plate 12 is an air cylinder assembly S which extends vertically and is attached to the top plate 12 by means of bolts. The air cylinder assembly S has a piston rod 15 extending downwardly through a support plate 13 for attachment to the movable press support plate 23. With this air cylinder arrangement, the movable press support plate 23 and the mounting plate 21 and accordingly the inflatable bag 20 can be driven toward the female die 31. Other drive mechanisms such as a hydraulic cylinder or a screw press (not shown) may be used in place of the air cylinder. The mounting plate 21 includes a vertically disposed guide plate 24 attached thereto and having an oblong aperture 25 formed therein for receipt of a pin 26 attached to the press support plate 23. With this arrangement, the mounting plate 21 for the inflatable bag 20 can be moved between a lower forming position and an upper tray removal position accurately without deviating from a vertical path defined by the oblong aperture 25. A front panel 14 is attached to one of the support posts 11 to mount various control switches and displays thereon.

Figure 4 shows an unformed paperboard blank 5 between the inflatable bag 20 and the female die 31 prior to the forming operation.

Before the initiation of the forming operation, the female die 31 is preheated to 70 to 80 °C while, at the same time, the inflatable bag 20 is preheated to approximately 100 °C using the infrared heating device. Other temperature values to which the female die 31 and the inflatable bag 20 are heated may be selected depending upon the type of material from which the tray is drawn.

The unformed paperboard blank 5 is then placed on the female die 31 by fitting it snugly onto the ring portion 320 surrounding the die cavity 32.

The next step is to operate the air cylinder assembly S to move the inflatable bag 20, which is in a somewhat inflated condition, downwardly so as to compress the papaerboard blank 5 against the bottom of the die cavity 32. When this occurs, the control valve (not shown) is operated such that the inflatable bag 20 is supplied with an additional amount of pressurized air to further inflate the inflatable bag. Simultaneously therewith, it is preferable to operate the vacuum pump or the like (not shown) to remove air from a plenum occurring between the paperboard blank 5 and the die cavity 32 so that the paperboard blank may take exactly the same shape as defined by the die cavity 32.

It should be noted that the heating of the female die 31 and the inflatable bag 20 to their predetermined temperatures will cause the sandwiched paperboard blank 5 to become heated, facilitating the drawing of the blank into the die cavity 32. Also, since the paperboard blank 5 is urged against the inside surface of the die cavity 32 by supplying a progressive amount of pressurized air to the inflatable bag 20, a uniform pressure is attained all over portions of the inflatable bag 20 which are in contact with the paperboard blank 5, resulting in the formation of the blank to a desired shape.

During the forming process, as the paperboard blank 5 is urged against the die cavity 32, the inflatable bag 20 first acts to clamp the periphery of the blank between it and the ring portion 320 of the female die 31. When, in this condition, the inflatable bag 20 is further inflated, it will deform the paperboard blank 5 progressively and ultimately cause it to engage the inside surface of the die cavity 32. It should be noted that this arrangement can control wrinkling in portions of a formed tray where greater deformations occur, since the inflatable bag 20 is progressively inflated to gradually deform the paperboard blank 5 into the die cavity without drawing an excess amount of paperboard into the cavity.

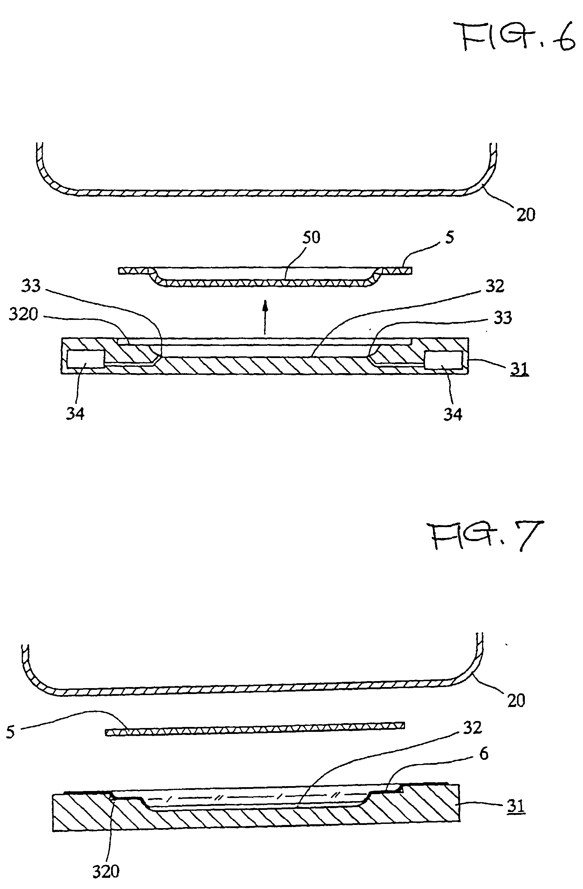

When the forming process is completed, the inflatable bag 20 is deflated by allowing pressurized air to escape from the bag, while, at the same time, it is moved upward to the tray removal position. The formed paperboard tray is then removed, as shown in Figure 6. After removal of the tray from the die cavity 32, it is allowed to cool, and excess paper is trimmed to convert the formed tray into a final desired shape.

Figure 7 shows another embodiment of the present invention wherein the stationary lower die assembly 31 does not have vent holes, a manifold and their associated vacuum system. It should be noted that since the surfaces of a paperboard and the wooden female die are generally not smooth, air captured between the paperboard blank and the inside surface of the die cavity during forming will easily escape, enabling the formation of the blank into the desired shape.

In this embodiment, the stationary lower die assembly 31 has a thin film of lubricating material 6 applied on and adjacent the ring portion 320 where a paperboard blank is clamped, so that the paperboard blank 5 can move relative to the ring portion. This arrangement will aid in preventing damages to the paperboard blank when more than a predetermined force is exerted. Examples of the thin film of lubricating material include a Teflon coating directly or indirectly applied to the die assembly.

Although the invention has been described with referene to preferred embodiments thereof, many variations and modifications thereof will now be apparent to those skilled in the art. Accordingly, the scope of the invention is to be limited, not by the details of the embodiments illustratively described herein, but only by the terms of the appended claims.

## Claims

1. A paperboard tray characterized in that the tray is formed by using a stationary die member and an inflatable bag member supplied with a controllable amount of fluid to compress a paperboard blank placed between the stationary die member and the inflatable bag member into a desired tray shape.

2. A paperboard tray as set forth in claim 1, characterized in that the stationary die member and the inflatable bag are heated during compressing of the paperboard blank into the desired tray shape.

3. A paperboard tray as set forth in claim 1, characterized in that the paperboard blank is corrugated paperboard.

4. A method for forming a paperboard tray, comprising the steps of:
heating an inflatable bag member and a stationary die member;
placing a paperboard blank in position between the inflatable bag member and the stationary die member; and
supplying a controllable amount of fluid to the inflatable bag member to inflate the bag member so that the paperboard blank may be compressed into a desired tray shape.

5. A method for forming a paperboard tray according to claim 4, characterized in that the stationary die member has lubricant mean provided in or near its periphery so that the paperboard blank can readily move relative to the stationary die member.

6. An apparatus for forming a paperboard blank into a tray, comprising:
a stationary die member;
means for heating the stationary die member;
an inflatable bag member;
a source of fluid to be connected to the inflatable bag member;
means for heating the inflatable bag member; and
means for supplying a controllable amount of the fluid from the fluid source to the inflatable bag so that the inflatable bag member gradually compresses paperboard blank against the stationary die member to produce a paperboard tray.

7. An apparatus for forming a paperboard blank into a tray according to claim 6, characterized in that the apparatus further includes means for removing air from a plenum occurring between the paperboard blank and the stationary die member during the compressing step.

8. An apparatus for forming a paperboard blank into a tray according to claim 6, characterized in that the apparatus further includes means for providing lubrication to a ring portion of the stationary die member so that the paperboard blank can readily move relative to the die member.
